# EUROPÄISCHE PATENTSCHRIFT

(11) **EP 3 520 953 B1**
(45) Veröffentlichungstag und Bekanntmachung des Hinweises auf die Patenterteilung: **04.11.2020**
(21) Anmeldenummer: 19153857.8
(22) Anmeldetag: 28.01.2019
(51) Int. Cl.: B23K 37/04

(54) **SCHNELLWECHSELKUPPLUNG**
QUICK EXCHANGE COUPLING
EMBRAYAGE À CHANGEMENT RAPIDE

(30) Priorität: 05.02.2018 DE 102018102456
(43) Veröffentlichungstag der Anmeldung: 07.08.2019
(73) Patentinhaber: Eberspächer Exhaust Technology GmbH & Co. KG, 66539 Neunkirchen (DE)
(72) Erfinder: Puchta, Christoph, 66287 Quierschied (DE); Glieden, Achim, 66578 Schiffweiler (DE); Wagmann, Martin, 66606 St. Wendel (DE)
(74) Vertreter: Ruttensperger Lachnit Trossin Gomoll

(56) Entgegenhaltungen:
- CN-A- 103 394 851
- CN-B- 103 878 525
- CN-U- 202 292 005
- CN-U- 203 125 039
- JP-A- 2002 161 741

## Beschreibung

Die vorliegende Erfindung betrifft eine Schnellwechselkupplung, die insbesondere dazu eingesetzt werden kann, in einer Schweißanlage, in welcher beispielsweise Komponenten für Brennkraftmaschinenabgasanlagen miteinander verschweißt werden sollen, einen die miteinander zu verschweißenden Komponenten in einer für einen durchzuführenden Schweißvorgang geeigneten Positionierung aufnehmenden Vorrichtungsträger an eine Trägereinheit einer Schweißzelle anzukoppeln.

Das Verschweißen von Komponenten von Abgasanlagen für Brennkraftmaschinen ist ein Arbeitsprozess, bei welchem viele derartige Komponenten in möglichst kurzer Zeit miteinander zu verschweißen sind und auch verschiedene Typen von Komponenten für verschiedene aufgebaute Abgasanlagen zu verschweißen sind. Dies macht es erforderlich, die zum Aufbau einer Abgasanlage miteinander zu verschweißenden Komponenten in kurzer Zeit in eine Schweißanlage einbringen zu können und die miteinander verschweißten Komponenten nach durchgeführtem Schweißvorgang einfach und schnell wieder aus der Schweißanlage entfernen zu können, bzw. einen schnellen Wechsel der zum Halten der miteinander zu verschweißenden Komponenten eingesetzten Vorrichtung realisieren zu können.

Eine Schnellwechselkupplung gemäß dem Oberbegriff des Anspruchs 1 ist aus der CN 203 125 039 U bekannt.

Es ist die Aufgabe der vorliegenden Erfindung, eine Schnellwechselkupplung vorzusehen, mit welcher in einfacher und schnell durchzuführende Art und Weise ein miteinander zu verschweißende Komponenten tragender Vorrichtungsträger an eine Trägereinheit einer Schweißzelle angekoppelt und von dieser losgelöst werden kann.

Erfindungsgemäß wird diese Aufgabe gelöst durch eine Schnellwechselkupplung zur Ankopplung eines Vorrichtungsträgers an eine Trägereinheit einer Schweißzelle, insbesondere zum Verschweißen von Komponenten für Brennkraftmaschinenabgasanlagen, umfassend eine an einer Trägereinheit einer Schweißzelle festzulegende erste Kupplungseinheit und wenigstens eine an einem Vorrichtungsträger festzulegende zweite Kupplungseinheit, wobei eine Kupplungseinheit von erster Kupplungseinheit und zweiter Kupplungseinheit eine Schiebe-Eingriffsaussparung aufweist und die andere Kupplungseinheit von erster Kupplungseinheit und zweiter Kupplungseinheit einen in einer Schieberichtung in die Schiebe-Eingriffsaussparung einschiebbaren Schiebe-Eingriffskörper aufweist, ferner umfassend eine zwischen einem Freigabezustand und einem Formschluss-Positionierzustand verstellbare Formschluss-Positionieranordnung, wobei bei in die Schiebe-Eingriffsaussparung eingreifend positioniertem Schiebe-Eingriffskörper die Formschluss-Positionieranordnung im Formschluss-Positionierzustand den Schiebe-Eingriffskörper in einer Betriebsstellung bezüglich der Schiebe-Eingriffsaussparung positioniert gegen Verschiebung in der Schiebe-Eingriffsaussparung hält.

Bei der erfindungsgemäß aufgebauten Schnellwechselkupplung werden die beiden Kupplungseinheiten durch Verschiebung bezüglich einander in Eingriff gebracht und durch Formschluss in einer für einen durchzuführenden Schweißvorgang geeigneten Betriebsstellung bezüglich einander gehalten. Sowohl der Formschluss, als auch der Schiebeeingriff sind einfach und schnell herstellbar und auch wieder lösbar, so dass die zur Integration eines Vorrichtungsträgers in eine Schweißanlage erforderliche Zeitdauer und ebenso die zum Entfernen des Vorrichtungsträgers aus einer Schweißanlage erforderliche Zeitdauer sehr kurz sind, gleichwohl jedoch während des Schweißvorgangs bei realisierter Kopplungswirkung die beiden Kupplungseinheiten und damit ein Vorrichtungsträger und eine Trägereinheit in definierter Positionierung bezüglich einander gehalten sind.

Für eine eine stabile Verbindung gewährleistende, gleichwohl das Verschieben zulassende Ausgestaltung ist erfindungsgemäß ferner vorgesehen, dass die Schiebe-Eingriffsaussparung eine Hinterschneidung bildet und der in die Schiebe-Eingriffsaussparung eingeschobene Schiebe-Eingriffskörper die Hinterschneidung hintergreift. Während für eine derartige Hinterschneidung und das komplementäre Profil am Schiebe-Eingriffskörper eine Vielzahl geometrischer Ausgestaltungen, wie beispielsweise eine gestufte Profilierung, möglich ist, hat sich eine Ausgestaltung, bei welcher die Schiebe-Eingriffsaussparung ein

Schwalbenschwanz-Innenprofil aufweist und der Schiebe-Eingriffskörper ein Schwalbenschwanz-Außenprofil aufweist, als besonders vorteilhaft erwiesen.

Da im Allgemeinen die eine Kupplungseinheit zum Bereitstellen der Schiebe-Eingriffsaussparung baulich komplexer ausgestaltet ist, als die andere Kupplungseinheit, wird weiter vorgeschlagen, dass die erste Kupplungseinheit die eine Kupplungseinheit ist und die zweite Kupplungsseite die andere Kupplungseinheit ist. Auf diese Art und Weise ist gewährleistet, dass die allgemein baulich komplexer ausgestaltete Kupplungseinheit an der Schweißzelle bzw. in einer Schweißanlage verbleiben kann.

Für eine baulich einfache Ausgestaltung wird vorgeschlagen, dass der Schiebe-Eingriffskörper als Schiebe-Eingriffsplatte ausgebildet ist.

Um bei Herstellung des Eingriffs die beiden Kupplungseinheiten in eine definierte Positionierung bringen zu können, wird vorgeschlagen, dass der Schiebe-Eingriffsaussparung ein eine maximale Einschiebeposition des Schiebe-Eingriffskörpers bezüglich der Schiebe-Eingriffsaussparung vorgebender Einschubanschlag zugeordnet ist.

Gemäß einer besonders vorteilhaften Weiterbildung kann dabei vorgesehen sein, dass die maximale Einschiebeposition nicht der Betriebsstellung entspricht, und dass bei in der oder im Bereich der maximalen Einschiebeposition positioniertem Schiebe-Eingriffskörper und Verstellung der Formschluss-Positionieranordnung in Richtung Formschluss-Positionierzustand der Schiebe-Eingriffskörper durch die Formschluss-Positionieranordnung in Richtung Betriebsstellung verschiebbar ist. Auf diese Art und Weise wird gewährleistet, dass bei Wirksamwerden der Formschluss-Positionieranordnung eine Überbestimmung der formschlüssig wirksamen Positionierbereiche nicht entsteht.

Zur Erlangung einer stabilen Formschluss-Wechselwirkung kann die Formschluss-Positionieranordnung ein in eine Formschluss-Positionieraussparung eingreifend positionierbares Formschluss-Positionierorgan umfassen.

Dabei kann für eine auch ein ungewolltes Loslösen unterbindende oder zumindest erschwerende Ausgestaltung vorgesehen sein, dass das Formschluss-Positionierungsorgan bei Verstellung der Formschluss-Positionieranordnung zwischen dem Freigabezustand und dem Formschluss-Positionierzustand im Wesentlichen orthogonal zur Schieberichtung bewegbar ist. Ferner kann für eine selbsttätige Bewegung der beiden Kupplungseinheiten bezüglich einander in die Betriebsstellung das Formschluss-Positionierorgan oder/und die Formschluss-Positionieraussparung wenigstens eine bei Verstellung der Formschluss-Positionieranordnung in Richtung Positionierzustand zur Verschiebung des Schiebe-Eingriffskörpers in Richtung Betriebsstellung wirkende Positionierschräge aufweisen.

Da, wie bereits ausgeführt, im Allgemeinen die die Schiebe-Eingriffsaussparung bereitstellende Kupplungseinheit die komplexer aufgebaute Kupplungseinheit ist und somit beispielsweise auch zum Verbleib an einer Schweißzelle vorgesehen ist, wird weiter vorgeschlagen, dass das Formschluss-Positionierorgan an der einen Kupplungseinheit und die Formschluss-Positionieraussparung an der anderen Kupplungseinheit vorgesehen sind.

Um durch Einschieben der anderen Kupplungseinheit in die eine Kupplungseinheit den Eingriffszustand herstellen zu können, ist es im Allgemeinen erforderlich, dass die beiden Kupplungseinheiten ein geringes Bewegungsspiel bezüglich einander auch quer zur Schieberichtung aufweisen. Insbesondere auch dann, wenn durch die Formschluss-Positionieranordnung zwar eine Verschiebung der beiden Kupplungseinheit in der Schieberichtung unterbunden werden kann, ist es für eine für einen Schweißvorgang geeignete, definierte Positionierung der beiden Kupplungseinheiten bezüglich einander besonders vorteilhaft, wenn eine zwischen einem Freigabezustand und einem Klemm-Positionierzustand verstellbare Klemm-Positionieranordnung zum Klemmen des Schiebe-Eingriffskörpers in der Schiebe-Eingriffsaussparung vorgesehen ist. Hierfür kann beispielsweise vorgesehen sein, dass die Klemm-Positionieranordnung ein bei Verstellung der Klemm-Positionieranordnung zwischen dem Freigabezustand und dem Klemm-Positionierzustand im Wesentlichen orthogonal zur Verschieberichtung bewegbares Klemm-Positionierorgan umfasst.

Bei einer besonders vorteilhaften Ausgestaltung kann das Klemm-Positionierorgan an der einen Kupplungseinheit vorgesehen sein, so dass weiterhin die Möglichkeit geschaffen ist, für eine baulich einfache Ausgestaltung dem Formschluss-Positionierorgan und dem Klemm-Positionierorgan einen gemeinsamen Stellantrieb zuzuordnen.

Eine stabile, gleichwohl leicht zu betätigende Ausgestaltung des Stellantriebs kann dabei vorsehen, dass dieser eine Stellspindel umfasst. Um auf weitere Sicherungsmaßnahmen verzichten zu können, kann vorteilhafterweise der Stellantrieb selbsthemmend sein. Für eine erhöhte Sicherheit gegen ungewolltes Loslösen wird vorgeschlagen, dass dem Stellantrieb eine den Stellantrieb gegen Verstellung blockierende Blockieranordnung zugeordnet ist.

Die Erfindung betrifft ferner eine Schweißanlage, insbesondere zum Verschweißen von Komponenten für Brennkraftmaschinenabgasanlagen, umfassend eine Schweißzelle mit einer Trägereinheit, wenigstens einen Vorrichtungsträger zur Aufnahme einer Mehrzahl von miteinander zu verschweißenden Komponenten sowie eine erfindungsgemäß aufgebaute Schnellwechselkupplung, wobei die erste Kupplungseinheit an der Trägereinheit festgelegt ist und wenigstens eine zweite Kupplungseinheit an einem Vorrichtungsträger festgelegt ist.

Die vorliegende Erfindung wird nachfolgend mit Bezug auf die beiliegenden Figuren detailliert beschrieben. Es zeigt:
- Fig. 1: die wesentlichen Systembereiche einer Schweißanlage zum Verschweißen von Komponenten für Brennkraftmaschinenabgasanlagen;

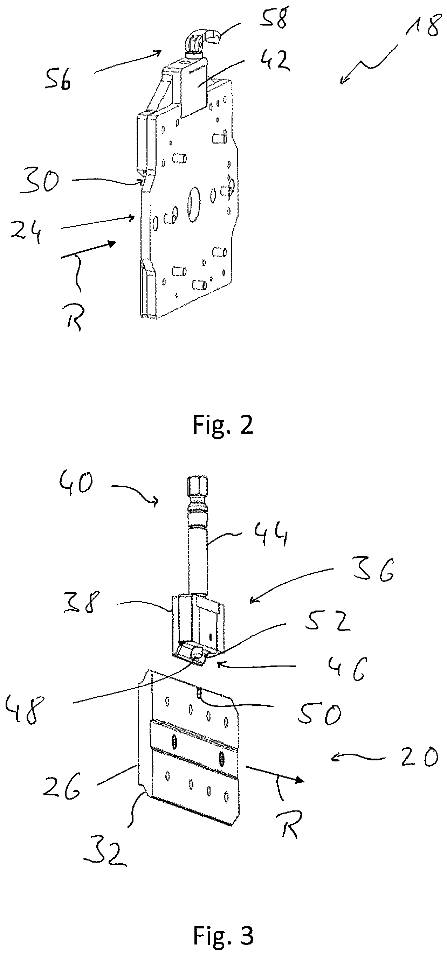

- Fig. 2: in perspektivischer Ansicht eine an einer Trägereinheit einer Schweißzelle festzulegende erste Kupplungseinheit einer Schnellwechselkupplung;
- Fig. 3: in perspektivischer Ansicht eine an einem Vorrichtungsträger festzulegenden zweiten Kupplungseinheit der Schnellwechselkupplung mit einer zugeordnete Klemm-Positionieranordnung;

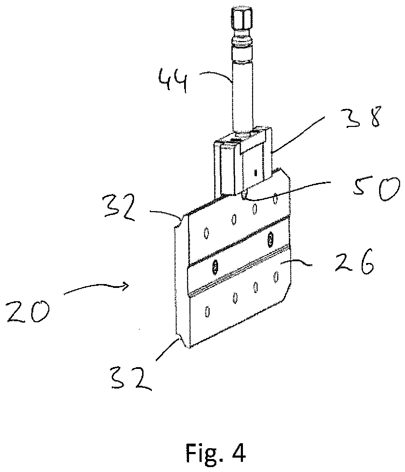

- Fig. 4: eine der Fig. 3 entsprechende Ansicht der zweiten Kupplungseinheit mit der daran angreifenden Klemm-Positionieranordnung.

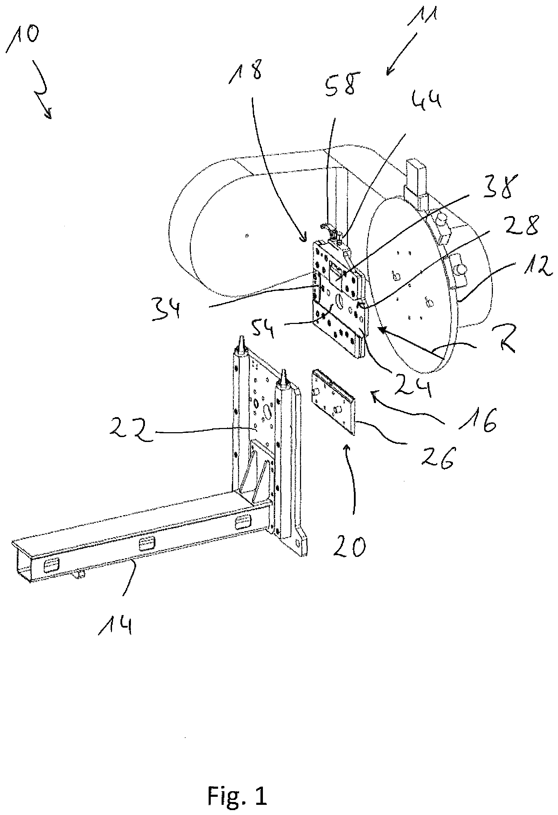

In Fig. 1 sind die für die Positionierung von zu verschweißenden Komponenten beispielsweise für Brennkraftmaschinenabgasanlagen wesentlichen Systembereiche einer allgemein mit 10 bezeichneten Schweißanlage zu erkennen. Diese Systembereiche umfassen eine in einer Schweißzelle 11 angeordnete plattenartige Trägereinheit 12 sowie einen an der Trägereinheit 12 zur Durchführung von Schweißvorgängen festzulegenden Vorrichtungsträger 14. An dem Vorrichtungsträger 14 können über in der Fig. 1 nicht dargestellte Positionierelemente die miteinander zu verschweißenden Komponenten in einer für die Verschweißung vorgesehenen Positionierung festgelegt werden.

Vermittels einer allgemein mit 16 bezeichneten Schnellwechselkupplung kann der Vorrichtungsträger 14 an der plattenartigen Trägereinheit 12 festgelegt werden, so dass die an dem Vorrichtungsträger 14 getragenen, zu verschweißenden Komponenten in der Schweißzelle 11 in geeigneter Positionierung gehalten bzw. angeordnet werden können.

Die Schnellwechselkupplung 16 umfasst eine an der plattenartigen Trägereinheit 12 beispielsweise durch Verschraubung festzulegende erste Kupplungseinheit 18 und eine an dem Vorrichtungsträger 14 beispielsweise ebenfalls durch Verschraubung festzulegende zweite Kupplungseinheit 20. Diese kann an einer am Vorrichtungsträger 14 vorgesehenen Trägerplatte 22 festgelegt werden.

Die Schnellwechselkupplung 16 bietet die Möglichkeit, durch Koppeln der beiden Kupplungseinheiten 18, 20 derselben den Vorrichtungsträger 14 schnell und lösbar an der Trägereinheit 12 anzubringen. Um dies zu ermöglichen, ist an der ersten Kupplungseinheit 18 eine Schiebe-Eingriffsaussparung 24 vorgesehen. Die zweite Kupplungseinheit 20 umfasst bzw. ist ausgebildet mit einem Schiebe-Eingriffskörper 26, der mit seiner plattenartigen Struktur in die Schiebe-Eingriffsaussparung 24 eingeschoben werden kann. Um durch das Einschieben einen festen, formschlüssigen Eingriff zu erzeugen, bildet die Schiebe-Eingriffsaussparung in ihren in einer Schieberichtung R verlaufenden Seitenrandbereichen eine beispielsweise nach Form eines Schwalbenschwanz-Innenprofils 30 ausgebildete Hinterschneidung 28. In entsprechender Weise ist der Schiebe-Eingriffskörper 26 als die Hinterschneidung 28 hintergreifender Körper, beispielsweise mit Schwalbenschwanz-Außenprofil 32 aufgebaut.

Zum Herstellen des Schiebeeingriffs wird der am Vorrichtungsträger 14 festgelegte Schiebe-Eingriffskörper 26 der zweiten Kupplungseinheit 20 beispielsweise im Wesentlichen in horizontaler Richtung in der Schieberichtung R in die Schiebe-Eingriffsaussparung 24 eingeschoben. Die Schiebe-Eingriffsaussparung 24 ist vorzugsweise durch einen Einschubanschlag 34 in der Schieberichtung R begrenzt, so dass durch den Einschubanschlag 34 eine maximale Einschiebeposition des Schiebe-Eingriffskörpers 26 in die Schiebe-Eingriffsaussparung 24 vorgegeben werden kann. Eine Bewegung über diese maximale Einschiebeposition hinaus ist nicht möglich.

Um ein Herausbewegen des Schiebe-Eingriffskörpers 26 der zweiten Kupplungseinheit 20 aus der Schiebe-Eingriffsaussparung zu unterbinden, ist an der ersten Kupplungseinheit 18 eine Klemm-Positionieranordnung 36 vorgesehen. Diese umfasst ein an der ersten Kupplungseinheit 18 im Wesentlichen quer zur Schieberichtung R verschiebbares Klemm-Positionierorgan 38 und einen dem Klemm-Positionierorgan 38 zugeordneten Stellantrieb 40. Der Stellantrieb 40 wiederum ist vorzugsweise mit einer beispielsweise in einem an der ersten Kupplungseinheit 18 vorgesehenen Gehäuse 42 aufgenommenen Stellspindel 44 bereitgestellt, die vorzugsweise selbsthemmend ausgebildet ist und deren Betätigung zu einer Verschiebung des Klemm-Positionierorgans quer zur Schieberichtung R führt.

Bei in die Schiebe-Eingriffsaussparung 24 eingeführtem Schiebe-Eingriffskörper 26 kann durch Bewegen des Klemm-Positionierorgans 38 in Richtung auf den Schiebe-Eingriffskörper 26 zu das Klemm-Positionierorgan 38 an einem seitlichen Randbereich des Schiebe-Eingriffskörpers 26 in Anlage gebracht werden und mit Druck gegen dieses gepresst werden. Dabei kann die Kontur des Klemm-Positionierorgans 38 der Kontur der Schiebe-Eingriffsaussparung 24 zum Bereitstellen der Hinterschneidung, also des Schwalbenschwanz-Innenprofils 30 angepasst sein, so dass das Klemm-Positionierorgan 38 den komplementär geformten und mit Schwalbenschwanz-Außenprofil 32 geformten Randbereich des Schiebe-Eingriffskörpers 26 übergreifen kann.

Durch das Klemm-Positionierorgan 38 bzw. die Klemm-Positionieranordnung 36 wird bei in die Schiebe-Eingriffsaussparung 24 eingreifend positioniertem und beispielsweise am Einschubanschlag 34 anliegendem Schiebe-Eingriffskörper 26 eine auch ein geringfügiges Bewegungsspiel zwischen diesem und der ersten Kupplungseinheit 18 aufhebende Klemmwirkung erzeugt.

Um insbesondere in der Schieberichtung R eine definierte Positionierung des Schiebe-Eingriffskörpers 26 bei Erzeugung der Klemmwirkung und damit Festlegung des Schiebe-Eingriffskörpers 26 bezüglich der Schiebe-Eingriffsaussparung 24 erreichen zu können, ist ferner eine allgemein mit 46 bezeichnete Formschluss-Positionieranordnung vorgesehen. Diese umfasst ein zapfenartiges Formschluss-Positionierorgan 48, das beispielsweise am Klemm-Positionierorgan 38 vorgesehen oder durch dieses bereitgestellt sein kann. In Zuordnung zu dem Formschluss-Positionierorgan 48 ist am Schiebe-Eingriffskörper 26 eine Formschluss-Positionieraussparung 50 derart vorgesehen, dass diese im Wesentlichen orthogonal zur Schieberichtung R offen ist. Das Formschluss-Positionierorgan 48 und die Formschluss-Positionieraussparung 50 sind derart aufeinander abgestimmt, dass bei in die Formschluss-Positionieraussparung 50 eingreifendem Formschluss-Positionierorgan 48 im Wesentlichen kein Bewegungsspiel zwischen dem Schiebe-Eingriffskörper 26 und dem Formschluss-Positionierorgan 38 und somit im Wesentlichen auch der das Formschluss-Positionierorgan 38 aufnehmenden ersten Kupplungseinheit 18 vorhanden ist.

Um bei der Festlegung des Schiebe-Eingriffskörpers 26 in der Schiebe-Eingriffsaussparung 24 eine Überbestimmung der Positionsvorgabe durch den Einschubanschlag 34 einerseits und das Formschluss-Positionierorgan 48 andererseits zu vermeiden, entspricht die bei Wirksamwerden des Einschubanschlags 34 erreichte maximale Einschiebeposition nicht der für einen Schweißvorgang vorzusehenden Betriebsstellung des Schiebe-Eingriffskörpers 26 in der Schiebe-Eingriffsaussparung 24. Vielmehr ist die maximale Einschiebeposition eine Position, in welche der Schiebe-Eingriffsköper 26 durch Bewegen über die Betriebsposition hinaus gebracht wird.

Zum Einschieben der zweiten Kupplungseinheit 20, also des plattenartigen Schiebe-Eingriffskörpers 26, in die erste Kupplungseinheit 18, also die Schiebe-Eingriffsaussparung 24, ist zunächst die Klemm-Positionieranordnung 36 und damit auch die Formschluss-Positionieranordnung 46 in einem Freigabezustand. In diesem Zustand kann der Schiebe-Eingriffskörper 26 ungehindert eingeschoben werden, bis er am Einschubanschlag 34 in Anlage kommt. Darauffolgend wird durch manuelle oder beispielsweise auch motorische Einwirkung auf den Stellantrieb 40, also insbesondere die Stellspindel 44, das Klemm-Positionierorgan 38 und mit diesem das Formschluss-Positionierorgan 48 in Richtung auf den Schiebe-Eingriffskörper 26 zu bewegt. Noch bevor das Klemm-Positionierorgan 38 seine Klemmwirkung entfalten kann, tritt das Formschluss-Positionierorgan 48 in die Formschluss-Positionieraussparung 50 ein. Da diese nicht in einer der Betriebsstellung entsprechenden Relativpositionierung zueinander sind, ist im dargestellten Beispiel am Formschluss-Positionierorgan 48 eine Positionierschräge 52 vorgesehen. Durch die keilartige Wirkung der Positionierschräge 52 wird bei Bewegung des Formschluss-Positionierorgans 48 auf den Schiebe-Eingriffskörper 26 zu und dabei in die Formschluss-Positionieraussparung 50 eintretendem Formschluss-Positionierorgan 48 auf den Schiebe-Eingriffskörper 26 eine diesen entgegengesetzt zur Schieberichtung R beaufschlagende Kraft entfaltet, wodurch der Schiebe-Eingriffskörper 26 in Richtung zur Betriebsposition verschoben wird. In diesem Zustand sind das Formschluss-Positionierorgan 48 und die Formschluss-Positionieraussparung 50 bezüglich einander korrekt ausgerichtet, und das Formschluss-Positionierorgan 48 kann zur definierten Vorgabe des Schiebe-Eingriffskörpers 26 weiter in die Formschluss-Positionieraussparung 50 eintreten, so dass ein Formschluss-Positionierzustand erreicht ist, in welchem eine Bewegung des Schiebe-Eingriffskörpers 26 in der Schieberichtung R oder entgegengesetzt zur Schieberichtung R nicht mehr möglich ist.

Bei weiter fortgesetzter Bewegung des das Formschluss-Positionierorgan 48 auch tragenden Klemm-Positionierorgans 38 in Richtung auf den Schiebe-Eingriffskörper 26 zu kommt das Klemm-Positionierorgan 38 zur Anlage am seitlichen Randberiech des Schiebe-Eingriffskörpers 26 und erzeugt somit in einem dann herbeigeführten Klemm-Positionierzustand eine Klemmwirkung, welche jedwede Bewegung des Schiebe-Eingriffskörpers 26 bezüglich der ersten Kupplungseinheit 18 unterbindet. Dies wird insbesondere dadurch unterstützt, dass durch die seitliche Beaufschlagung des Schiebe-Eingriffskörpers 26 durch das Klemm-Positionierorgan 38 die miteinander in Eingriff stehenden Schwalbenschwanz-Außen- bzw. Innenprofile zusätzlich eine den Schiebe-Eingriffskörper 26 im Wesentlichen senkrecht zur Schieberichtung R in Richtung auf einen Boden 54 der Schiebe-Eingriffsaussparung 24 zu pressende Kraft erzeugt wird.

Um bei Durchführung eines Schweißvorgangs zu verhindern, dass dabei möglicherweise auftretende Vibrationen zu einem Loslösen des Stellantriebs 40 führen, kann diesem zusätzlich eine allgemein mit 56 bezeichnete Blockieranordnung zugeordnet sein. Diese kann, beispielsweise untergebracht im Gehäuse 42, ein durch einen Klemmhebel 58 aktivierbares Klemmelement umfassen, welches in dem im Gehäuse 42 geführten Bereich des Stellantriebs 40 bzw. der Stellspindel 44 gegen diese presst und somit durch Reibkraftschluss oder/und durch Formschluss ein Lösen des an sich bereits selbsthemmend ausgebildeten Stellantriebs 40 verhindert.

Soll ein an der Trägereinheit 12 getragener Vorrichtungsträger 14 nach Durchführung eines Schweißvorgangs aus der Schweißzelle einer Schweißanlage 10 entfernt werden, kann zunächst die Blockieranordnung 56 deaktiviert werden. Daraufhin wird durch Einwirken auf die Stellspindel 44 die Klemm-Positionieranordnung 36 und mit dieser die Formschluss-Positionieranordnung 46 durch seitliches Herausziehen des Klemm-Positionierorgans 38 und des Formschluss-Positionierorgans 48 in den Freigabezustand gebracht, in welchem der Schiebe-Eingriffskörper 26 zusammen mit dem diesen tragenden Vorrichtungsträger 14 seitlich aus der Schiebe-Eingriffsaussparung 24 herausbewegt werden kann, um für einen nachfolgend durchzuführenden Schweißvorgang beispielsweise einen anderen, bereits mit zu verschweißenden Komponenten bestückten Vorrichtungsträger mit dem daran getragenen Schiebe-Eingriffskörper in Eingriff mit der ersten Kupplungseinheit 18 zu bringen.

Es ist darauf hinzuweisen, dass der im Wesentlichen die zweite Kupplungseinheit 20 bereitstellende, plattenartige Schiebe-Eingriffskörper 26 aus einem einzigen vorzugsweise mit Metallmaterial aufgebauten, plattenartigen Bauteil bestehen kann. Die komplexer gestaltete zweite Kupplungseinheit 18 kann mit einer an der Trägereinheit 12 festzulegenden, und auch den Boden 54 der Schiebe-Eingriffsaussparung 24 bereitstellenden Basisplatte vorzugsweise aus Metallmaterial aufgebaut sein, an welcher das Schwalbenschwanz-Innenprofil 30 bereitstellende Seitenplatten und eine den Einschubanschlag 34 bereitstellende Endplatte, vorzugsweise jeweils aus Metallmaterial aufgebaut, beispielsweise durch Verschraubung festgelegt sein können. Im Bereich einer der Seitenplatten kann das die Stellspindel 44 und die Blockieranordnung 56 aufnehmende Gehäuse 42 untergebracht sein. Diese Seitenplatte weist weiterhin eine Aussparung auf, in welcher das quer zur Schieberichtung R verschiebbare Klemm-Positionierorgan 38 aufgenommen bzw. geführt ist.

## Patentansprüche

1. Schnellwechselkupplung zur Ankopplung eines Vorrichtungsträgers an eine Trägereinheit (12) einer Schweißzelle (11), insbesondere zum Verschweißen von Komponenten für Brennkraftmaschinenabgasanlagen, umfassend eine an einer Trägereinheit (12) einer Schweißzelle (11) festzulegende erste Kupplungseinheit (18) und wenigstens eine an einem Vorrichtungsträger (14) festzulegende zweite Kupplungseinheit (20), wobei eine Kupplungseinheit von erster Kupplungseinheit (18) und zweiter Kupplungseinheit (20) eine Schiebe-Eingriffsaussparung (24) aufweist und die andere Kupplungseinheit von erster Kupplungseinheit (18) und zweiter Kupplungseinheit (20) einen in einer Schieberichtung (R) in die Schiebe-Eingriffsaussparung (24) einschiebbaren Schiebe-Eingriffskörper (26) aufweist, ferner umfassend eine zwischen einem Freigabezustand und einem Formschluss-Positionierzustand verstellbare Formschluss-Positionieranordnung (46), wobei bei in die Schiebe-Eingriffsaussparung (24) eingreifend positioniertem Schiebe-Eingriffskörper (26) die Formschluss-Positionieranordnung (46) im Formschluss-Positionierzustand den Schiebe-Eingriffskörper (26) in einer Betriebsstellung bezüglich der Schiebe-Eingriffsaussparung (24) positioniert gegen Verschiebung in der Schiebe-Eingriffsaussparung (24) hält, **dadurch gekennzeichnet, dass** die Schiebe-Eingriffsaussparung (24) eine Hinterschneidung bildet und der in die Schiebe-Eingriffsaussparung (24) eingeschobene Schiebe-Eingriffskörper (26) die Hinterschneidung hintergreift.

2. Schnellwechselkupplung nach Anspruch 1, **dadurch gekennzeichnet, dass** die Schiebe-Eingriffsaussparung (24) ein Schwalbenschwanz-Innenprofil (30) aufweist und der Schiebe-Eingriffskörper (26) ein Schwalbenschwanz-Außenprofil (52) aufweist.

3. Schnellwechselkupplung nach einem der vorangehenden Ansprüche, **dadurch gekennzeichnet, dass** die erste Kupplungseinheit (18) die eine Kupplungseinheit ist und die zweite Kupplungsseite (20) die andere Kupplungseinheit ist.

4. Schnellwechselkupplung nach einem der vorangehenden Ansprüche, **dadurch gekennzeichnet, dass** der Schiebe-Eingriffskörper (26) als Schiebe-Eingriffsplatte ausgebildet ist.

5. Schnellwechselkupplung nach einem der vorangehenden Ansprüche, **dadurch gekennzeichnet, dass** der Schiebe-Eingriffsaussparung (24) ein eine maximale Einschiebeposition des Schiebe-Eingriffskörpers (26) bezüglich der Schiebe-Eingriffsaussparung (24) vorgebender Einschubanschlag (34) zugeordnet ist.

6. Schnellwechselkupplung nach Anspruch 5, **dadurch gekennzeichnet, dass** die maximale Einschiebeposition nicht der Betriebsstellung entspricht, und dass bei in der oder im Bereich der maximalen Einschiebeposition positioniertem Schiebe-Eingriffskörper (26) und Verstellung der Formschluss-Positionieranordnung (46) in Richtung Formschluss-Positionierzustand der Schiebe-Eingriffskörper (26) durch die Formschluss-Positionieranordnung (46) in Richtung Betriebsstellung verschiebbar ist.

7. Schnellwechselkupplung nach einem der vorangehenden Ansprüche, **dadurch gekennzeichnet, dass** die Formschluss-Positionieranordnung (46) ein in eine Formschluss-Positionieraussparung (50) eingreifend positionierbares Formschluss-Positionierorgan (48) umfasst.

8. Schnellwechselkupplung nach Anspruch 7, **dadurch gekennzeichnet, dass** das Formschluss-Positionierungsorgan (48) bei Verstellung der Formschluss-Positionieranordnung (46) zwischen dem Freigabezustand und dem Formschluss-Positionierzustand im Wesentlichen orthogonal zur Schieberichtung (R) bewegbar ist.

9. Schnellwechselkupplung nach Anspruch 7 oder 8, **dadurch gekennzeichnet, dass** das Formschluss-Positionierorgan (48) oder/und die Formschluss-Positionieraussparung (50) wenigstens eine bei Verstellung der Formschluss-Positionieranordnung in Richtung Formschluss-Positionierzustand zur Verschiebung des Schiebe-Eingriffskörpers (26) in Richtung Betriebsstellung wirkende Positionierschräge (52) aufweist.

10. Schnellwechselkupplung nach Anspruch 7, 8 oder 9, **dadurch gekennzeichnet, dass** das Formschluss-Positionierorgan (48) an der einen Kupplungseinheit und die Formschluss-Positionieraussparung (50) an der anderen Kupplungseinheit vorgesehen sind.

11. Schnellwechselkupplung nach einem der vorangehenden Ansprüche, **dadurch gekennzeichnet, dass** eine zwischen einem Freigabezustand und einem Klemm-Positionierzustand verstellbare Klemm-Positionieranordnung (36) zum Klemmen des Schiebe-Eingriffskörpers (26) in der Schiebe-Eingriffsaussparung (24) vorgesehen ist.

12. Schnellwechselkupplung nach Anspruch 11, **dadurch gekennzeichnet, dass** die Klemm-Positionieranordnung (36) ein bei Verstellung der Klemm-Positionieranordnung (36) zwischen dem Freigabezustand und dem Klemm-Positionierzustand im Wesentlichen orthogonal zur Verschieberichtung (R) bewegbares Klemm-Positionierorgan (38) umfasst.

13. Schnellwechselkupplung nach Anspruch 11 oder 12, **dadurch gekennzeichnet, dass** das Klemm-Positionierorgan (38) an der einen Kupplungseinheit vorgesehen ist.

14. Schnellwechselkupplung nach Anspruch 7 und Anspruch 12 oder 13, **dadurch gekennzeichnet, dass** dem Formschluss-Positionierorgan (48) und dem Klemm-Positionierorgan (38) ein gemeinsamer Stellantrieb (40) zugeordnet ist,
vorzugsweise wobei der Stellantrieb (40) eine Stellspindel (44) umfasst, oder/und der Stellantrieb (40) selbsthemmend ist, oder/und dem Stellantrieb (40) eine den Stellantrieb gegen Verstellung blockierende Blockieranordnung (56) zugeordnet ist.

15. Schweißanlage, insbesondere zum Verschweißen von Komponenten für Brennkraftmaschinenabgasanlagen, umfassend eine Schweißzelle (11) mit einer Trägereinheit (12), wenigstens einen Vorrichtungsträger (14) zur Aufnahme einer Mehrzahl von miteinander zu verschweißenden Komponenten sowie eine Schnellwechselkupplung (16) nach einem der vorangehenden Ansprüche, wobei die erste Kupplungseinheit (18) an der Trägereinheit (12) festgelegt ist und wenigstens eine zweite Kupplungseinheit (20) an einem Vorrichtungsträger (14) festgelegt ist.

## Claims

1. Quick-change coupling for coupling a device carrier to a carrier unit (12) of a welding cell (11), especially for welding together components for internal combustion engine exhaust systems, comprising a first coupling unit (18) to be fixed to a carrier unit (12) of a welding cell (11) and at least one second coupling unit (20) to be fixed to a device carrier (14), one coupling unit out of the first coupling unit (18) and the second coupling unit (20) having a pushing meshing recess (24) and the other coupling unit out of the first coupling unit (18) and the second coupling unit (20) having a pushing meshing body (26) that can be inserted into the pushing meshing recess (24) in a direction of pushing (R), further comprising a positive-locking positioning device (46) that can be adjusted between a released state and a positive-locking positioning state, wherein when the pushing meshing body (26) is positioned in a manner meshing with the pushing meshing recess (24), the positive-locking positioning device (46) in the positive-locking positioning state holds the pushing meshing body (26) in an operating position in relation to the pushing meshing recess (24) positioned against displacement in the pushing meshing recess (24), **characterized in that** the pushing meshing recess (24) forms an undercut and the pushing meshing body (26) inserted into the pushing meshing recess (24) extends behind the undercut.

2. Quick-change coupling in accordance with claim 1, **characterized in that** the pushing meshing recess (24) has a dovetail inner profile (30) and the pushing meshing body (26) has a dovetail outer profile (52).

3. Quick-change coupling in accordance with one of the preceding claims, **characterized in that** the first coupling unit (18) is the one coupling unit and the second coupling unit is the other coupling unit.

4. Quick-change coupling in accordance with one of the preceding claims, **characterized in that** the pushing meshing body (26) is configured as a pushing meshing plate.

5. Quick-change coupling in accordance with one of the preceding claims, **characterized in that** an insertion stop (34) defining a maximum insertion position of the pushing meshing body (26) in relation to the pushing meshing recess (24) is associated with the pushing meshing recess (24).

6. Quick-change coupling in accordance with claim 5, **characterized in that** the maximum insertion position does not correspond to the operating position, and that when the pushing meshing body (26) is positioned in the maximum insertion position or in the range of the maximum insertion position and when the positive-locking positioning device (46) is adjusted in the direction of the positive-locking positioning state, the pushing meshing body (26) can be displaced by the positive-locking positioning device (46) in the direction of the operating position.

7. Quick-change coupling in accordance with one of the preceding claims, **characterized in that** the positive-locking positioning device (46) comprises a positive-locking positioning element (48) that can be positioned in a manner meshing with a positive-locking positioning recess (50).

8. Quick-change coupling in accordance with claim 7, **characterized in that** when the positive-locking positioning device (46) is adjusted between the released state and the positive-locking positioning state, the positive-locking positioning element (48) can be moved essentially at right angles to the direction of pushing (R).

9. Quick-change coupling in accordance with claim 7 or 8, **characterized in that** the positive-locking positioning element (48) or/and the positive-locking positioning recess (50) has at least one positioning bevel (52) acting for displacement of the pushing meshing body (26) in the direction of the operating position when the positive-locking positioning device is adjusted in the direction of the positive-locking positioning state.

10. Quick-change coupling in accordance with claim 7, 8 or 9, **characterized in that** the positive-locking positioning element (48) is provided at the one coupling unit and the positive-locking positioning recess (50) is provided at the other coupling unit.

11. Quick-change coupling in accordance with one of the preceding claims, **characterized in that** a clamping positioning device (36), which can be adjusted between a released state and a clamping positioning state, is provided for clamping the pushing meshing body (26) in the pushing meshing recess (24).

12. Quick-change coupling in accordance with claim 11, **characterized in that** the clamping positioning device (36) comprises a clamping positioning element (38) that can be moved essentially at right angles to the direction of displacement (R) when the clamping positioning device (36) is adjusted between the released state and the clamping positioning state.

13. Quick-change coupling in accordance with claim 11 or 12, **characterized in that** the clamping positioning element (38) is provided at the one coupling unit.

14. Quick-change coupling in accordance with claim 7 and claim 12 or 13, **characterized in that** a common actuating drive (40) is associated with the positive-locking positioning element (48) and with the clamping positioning element (38), preferably wherein the actuating drive (40) comprises an actuating spindle (44), or/and the actuating drive (40) is self-locking, or/and a blocking device (56) blocking the actuating drive against adjustment is associated with the actuating drive (40).

15. Welding system, especially for welding together components for internal combustion engine exhaust systems, comprising a welding cell (11) with a carrier unit (12), at least one device carrier (14) for accommodating a plurality of components to be welded together as well as a quick-change coupling (16) in accordance with one of the preceding claims, wherein the first coupling unit (18) is fixed to the carrier unit (12) and at least one second coupling unit (20) is fixed to a device carrier (14).

## Revendications

1. Accouplement à changement rapide pour l'accouplement d'un support de dispositif à une unité de support (12) d'une cellule de soudage (11), en particulier pour le soudage de composants de systèmes d'échappement de moteurs à combustion interne, comprenant une première unité d'accouplement (18) à fixer sur une unité de support (12) d'une cellule de soudage (11) et au moins une deuxième unité d'accouplement (20) à fixer sur un support de dispositif (14), une unité d'accouplement parmi la première unité d'accouplement (18) et la deuxième unité d'accouplement (20) comprenant un évidement d'engrènement de poussée (24) et l'autre unité d'accouplement parmi la première unité d'accouplement (18) et la deuxième unité d'accouplement (20) comprenant un corps d'engrènement de poussée (26) qui peut être inséré dans l'évidement d'engrènement de poussée (24) dans une direction de poussée (R), comprenant en outre un dispositif de positionnement à engagement positif (46) qui peut être ajusté entre un état de libération et un état de positionnement à engagement positif, dans lequel lorsque le corps d'engrènement de poussée (26) est positionné de manière à s'engrener avec l'évidement d'engrènement de poussée (24), le dispositif de positionnement à engagement positif (46) dans l'état de positionnement à engagement positif maintient le corps d'engrènement de poussée (26) dans une position de fonctionnement par rapport à l'évidement d'engrènement de poussée (24) positionné contre le déplacement dans l'évidement d'engrènement de poussée (24), **caractérisé en ce que** l'évidement d'engrènement de poussée (24) forme une contre-dépouille et que le corps d'engrènement de poussée (26) inséré dans l'évidement d'engrènement de poussée (24) s'étend derrière la contre-dépouille.

2. Accouplement à changement rapide selon la revendication 1, **caractérisé en ce que** l'évidement d'engrènement de poussée (24) présente un profil intérieur en queue d'aronde (30) et le corps d'engrènement de poussée (26) présente un profil extérieur en queue d'aronde (52).

3. Accouplement à changement rapide selon l'une des revendications précédentes, **caractérisé en ce que** la première unité d'accouplement (18) est l'une des unités d'accouplement et la deuxième unité d'accouplement est l'autre des unités d'accouplement.

4. Accouplement à changement rapide selon l'une des revendications précédentes, **caractérisé en ce que** le corps d'engrènement de poussée (26) est configuré comme une plaque d'engrènement de poussée.

5. Accouplement à changement rapide selon l'une des revendications précédentes, **caractérisé en ce qu'**une butée d'insertion (34) définissant une position d'insertion maximale du corps d'engrènement de poussée (26) par rapport à l'évidement d'engrènement de poussée (24) est associée à l'évidement d'engrènement de poussée (24).

6. Accouplement à changement rapide selon la revendication 5, **caractérisé en ce que** la position d'insertion maximale ne correspond pas à la position de fonctionnement, et **en ce que**, lorsque le corps d'engrènement de poussée (26) est positionné dans la position d'insertion maximale ou dans la zone de la position d'insertion maximale et lorsque le dispositif de positionnement à engagement positif (46) est déplacé dans la direction de l'état de positionnement à engagement positif, le corps d'engrènement de poussée (26) peut être déplacé par le dispositif de positionnement à engagement positif (46) dans la direction de la position de fonctionnement.

7. Accouplement à changement rapide selon l'une des revendications précédentes, **caractérisé en ce que** le dispositif de positionnement à engagement positif (46) comprend un élément de positionnement à engagement positif (48) qui peut être positionné de manière à s'engrener avec un évidement de positionnement à engagement positif (50).

8. Accouplement à changement rapide selon la revendication 7, **caractérisé en ce que**, lorsque le dispositif de positionnement à engagement positif (46) est réglé entre l'état de libération et l'état de positionnement à engagement positif, l'élément de positionnement à engagement positif (48) peut être déplacé essentiellement à angle droit par rapport à la direction de poussée (R).

9. Accouplement à changement rapide selon la revendication 7 ou 8, **caractérisé en ce que** l'élément de positionnement à engagement positif (48) et/ou l'évidement de positionnement à engagement positif (50) présente au moins un chanfrein de positionnement (52) agissant pour le déplacement du corps d'engrènement de poussée (26) en direction de la position de fonctionnement lorsque le dispositif de positionnement à engagement positif est réglé en direction de l'état de positionnement à engagement positif.

10. Accouplement à changement rapide selon la revendication 7, 8 ou 9, **caractérisé en ce que** l'élément de de positionnement à engagement positif (48) est prévu sur l'une des unités d'accouplement et l'évidement de positionnement à engagement positif (50) est prévu sur l'autre des unités d'accouplement.

11. Accouplement à changement rapide selon l'une des revendications précédentes, **caractérisé en ce qu'**un dispositif de positionnement par serrage (36), qui peut être réglé entre un état de libération et un état de positionnement par serrage, est prévu pour serrer le corps d'engrènement de poussée (26) dans l'évidement d'engrènement de poussée (24).

12. Accouplement à changement rapide selon la revendication 11, **caractérisé en ce que** le dispositif de positionnement par serrage (36) comprend un élément de positionnement par serrage (38) qui peut être déplacé essentiellement à angle droit par rapport à la direction de déplacement (R) lorsque le dispositif de positionnement par serrage (36) est réglé entre l'état de libération et l'état de positionnement par serrage.

13. Accouplement à changement rapide selon la revendication 11 ou 12, **caractérisé en ce que** l'élément de positionnement par serrage (38) est prévu sur l'une des unités d'accouplement.

14. Accouplement à changement rapide selon la revendication 7 et la revendication 12 ou 13, **caractérisé en ce qu'**un entraînement de commande (40) commun est associé à l'élément de positionnement à engagement positif (48) et à l'élément de positionnement par serrage (38),
de préférence dans lequel l'entraînement de commande (40) comprend une broche de commande (44), ou/et l'entraînement de commande (40) est autobloquant, ou/et un dispositif de blocage (56) bloquant l'entraînement de commande contre tout réglage est associé à l'entraînement de commande (40).

15. Installation de soudage, en particulier pour le soudage de composants de systèmes d'échappement de moteurs à combustion interne, comprenant une cellule de soudage (11) avec une unité de support (12), au moins un support de dispositif (14) pour recevoir une pluralité de composants à souder les uns aux autres ainsi qu'un accouplement rapide (16) selon l'une des revendications précédentes, la première unité d'accouplement (18) étant fixée sur l'unité de support (12) et au moins une deuxième unité d'accouplement (20) étant fixée sur un support de dispositif (14).
